# EUROPEAN PATENT SPECIFICATION

(11) **EP 0 594 073 B1**
(45) Date of publication and mention of the grant of the patent: **11.11.1998**
(21) Application number: 93116682.1
(22) Date of filing: 15.10.1993
(51) Int. Cl.: F24C 15/16, A47J 37/04

(54) **Oven with removable plate in a position spaced from the lower wall of its cooking chamber**
Ofen mit abnehmbarer von der unteren Ofenwand getrennter Platte
Four avec une plaque amovible en position séparé de la paroi inférieure de four

(30) Priority: 19.10.1992 IT MI922395
(43) Date of publication of application: 27.04.1994
(73) Proprietor: WHIRLPOOL EUROPE B.V., 5507 SK Veldhoven (NL)
(72) Inventor: Magetta, Adriano, c/o Whirlpool Europe S.r.l., I-21025 Comerio (VA) (IT)
(74) Representative: Guerci, Alessandro

(56) References cited:
- EP-A- 0 092 792
- US-A- 4 924 763
- PATENT ABSTRACTS OF JAPAN vol. 8 no. 57 (M-283) [1494] ,15 March 1984 & JP-A-58 210420 (TOKYO SHIBAURA) 7 December 1983,

## Description

This invention relates to an electric. gas, pyrolytic, multifunctional or combination oven comprising a cooking chamber bounded by side walls, a roof, a rear wall and a lower or base wall, said chamber being open on one side where a usual closable door is positioned, the oven comprising usual heating elements.

As is well known, in an oven of the aforesaid type, during its preparation the food must be exposed to the heating elements (electrical resistance heaters, gas burners, microwave generators and the like) in such a manner as to ensure its uniform treatment bv these elements.

For this reason it is known to provide in the cooking chamber of microwave ovens a rotary plate associated with the base wall of this chamber. This arrangement is not however applicable to ovens of the initially stated type because said heating elements (or at least part of them) are located at and below the base wall. It is therefore impossible to associate an electric motor with this base wall to drive a rotary plate positioned in proximity to said base wall, both because of obvious electromechanical problems involved in positioning the motor and because of heat protection problems for the motor, which is positioned only a short distance from the heating elements. Both for these and for cost reasons it is also impossible to provide transmission means connected to an electric motor positioned distant from the base wall and extending to a rotary plate positioned in proximity to or on said wall.

Patent abstract of Japan vol.8 no 57 & JP-A-58210 420 discloses a rotary tray device for an oven in which the tray is positioned in proximity to the base wall.

An object of the invention is to provide an oven of the aforesaid type with the facility for optimum preparation of contained food by subjecting this latter to movement.

A further object is to provide an oven of the aforesaid type which is of simple construction and low cost.

A further object is to provide an oven of the aforesaid type which offers high performance.

A further object is to provide an oven which can provide multiple preparation of food of which at least a part is in movement within the cooking chamber.

These and further objects which will be apparent to the expert of the art are attained by an oven of the stated type, the characteristics of which are described in the characterising part of claim 1.

The present invention will be more apparent from the accompanying drawing, which is provided by way of non-limiting example and in which:
Figure 1 is a front view, with certain parts omitted for clarity, of a first embodiment of an oven according to the invention;
Figure 2 is a view from above of part of the oven of Figure 1;
Figure 3 is a view similar to Figure 2 but showing a modification of the part represented therein;
Figure 4 is a side view of the oven part shown in Figure 3;
Figures 5 and 6 are views similar to Figures 3 and 4 but showing a further embodiment of the invention.

With reference to said figures, an oven for food preparation is indicated overall by 1 and is of the electrical resistance heater type. The oven can however be of gas, pyrolytic, multifunctional or combination type.

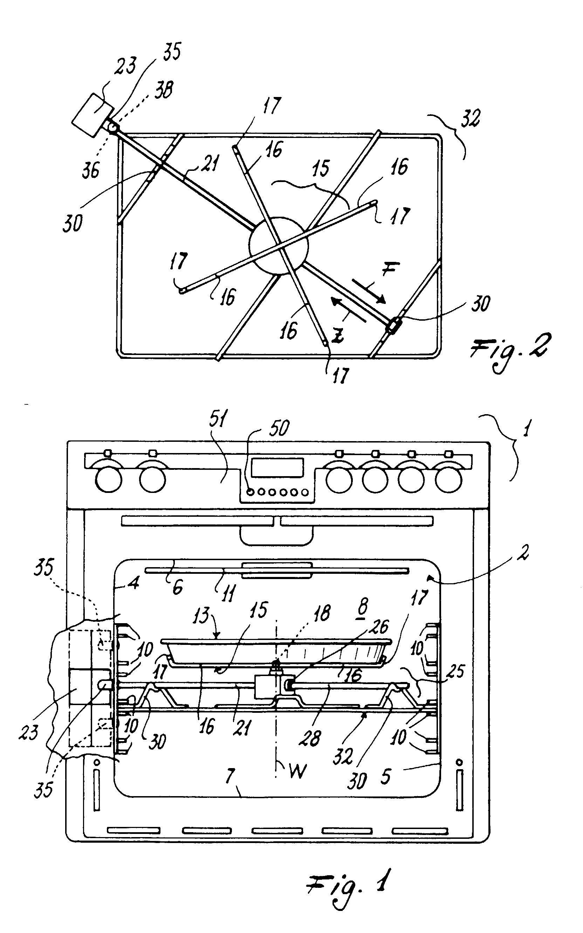

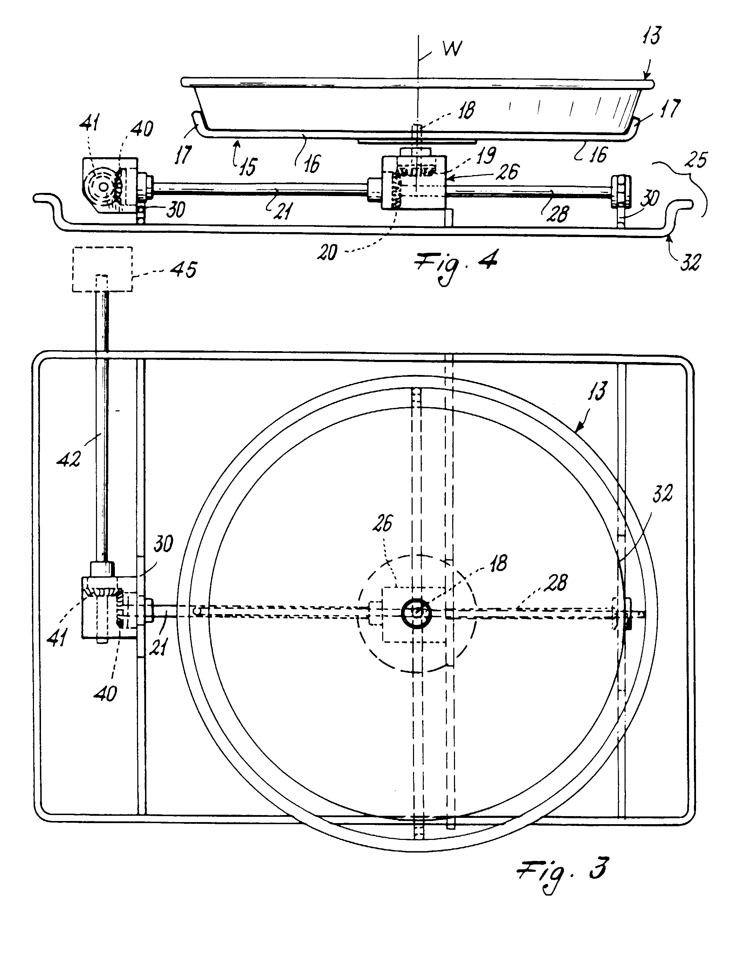

It comprises a cooking chamber 2 bounded by side walls 4 and 5, a roof 6, a lower or base wall 7 and a rear wall 8. Parallel overlying guides 10 are provided on the walls 4 and 5 to support usual grids. An electrical resistance element 11 can be seen in Figure 1 in proximity to the roof 6. The chamber is closed on its open side by a usual openable door (not shown).

The oven 1 is provided with a flat container or plate 13 movable within the chamber 2 and such as to enable the food placed in the plate to be subjected to uniform heat treatment by the oven heating elements, for example the resistance element 11 and a corresponding resistance element (not shown) provided on the underside of the wall 7.

Specifically, with reference to Figures 1 to 4, the container or plate 13 is removably supported by a cross frame 15 comprising arms 16 bent towards the roof 6 of the chamber 2 at their free ends. The frame 15 is associated with a pin 18 rigid with a first gear wheel 19 (visible in Figure 4) arranged to cooperate with a second gear wheel 20 (also visible in Figure 4) associated with a shaft 21 rotating about its longitudinal axis by the action of a usual electric motor, such as a stepping motor 23. The gear wheels 19 and 20 are preferably bevel gears so that they are able to cooperate properly with each other even if positioned at a right angle to each other. This enables the container or plate 13 to be rotated about a vertical axis W (ie the axis of the pin 18) perpendicular to the axis of said shaft 21.

The frame 15 and the shaft 21, this latter arranged transversely within the chamber 2, define a support 25 for the rotary container or plate 13.

The gear wheels 19 and 20 are arranged within a box structure 26 which is supported, via usual bearings not shown, by the shaft 21 and a further shaft 28 (coaxial with the shaft 21) which rest on supports of a grid 32 removably insertable into the guides 10 within the chamber 2. A further bearing or the like (not shown) enables the pin 18 to rotate about the axis W within the structure 26.

Specifically, in the embodiment shown in Figures 1 and 2, the shaft 21, the shaft 28 and the structure 26 associated with them are removably connected to the grid 32 and are slidable on supports 30 on this latter (arrows F and Z, Figure 2). This facilitates the insertion of the support 25 into the chamber 2 and the connection of the shaft 21 to the motor 23. This latter comprises in known manner a usual exit shaft 35, hollow at 36 to receive a bayonet for its torsional coupling to the shaft 21.

This coupling can for example be achieved by making the cavity 36 and one end of said shaft 21 of square cross-section.

In the embodiment shown in Figures 1 and 2, the motor 23 can be a usual roasting-jack already present in the chamber 2 or can be a separate motor provided beyond the walls of said chamber.

Advantageously, this motor can have several exit shafts 35 (for example three) positioned at different heights in the chamber 2 to enable the structure 25 and the plate 13 to be positioned at different heights within this chamber, said plate being positioned between the roof 6 and the wall 7. The container 13 is separated from this latter, and can be removably associated with the oven 1 by virtue of the aforedescribed construction of the support 25.

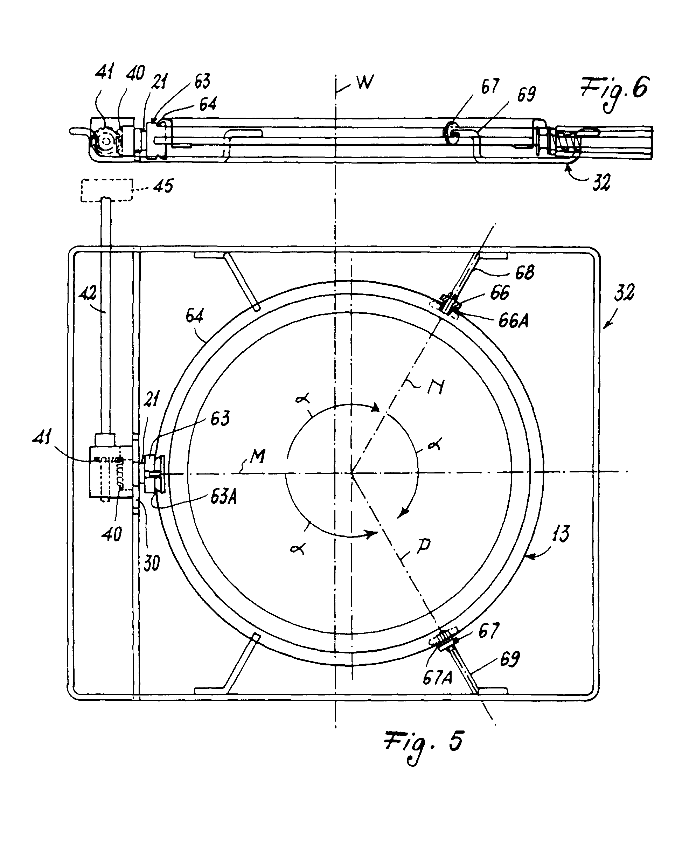

In contrast, in Figures 3 and 4 the container 13 is associated with a support 25 which is fixed in any known manner to the grid 32. The shaft 21 receives its movement via gear wheels 40 and 41 from a shaft 42 which is associated with said grid and can be coupled in a manner similar to that already described in relation to the shaft 21 and motor 23, plus an electric motor, such as a stepping motor 45, provided in the oven in a position eccentric to the wall in proximity to which it is located.

In Figures 5 and 6, in which parts corresponding to those of the already described figures are indicated by the same reference numerals, the shaft 21 is associated with a wheel 63 arranged to cooperate with the edge 64 of the container 13. This wheel, supported by the shaft 21, drives said container, which is supported by further idle wheels 66 and 67 associated with the grid 32 via fixed shafts 68 and 69 respectively. The wheels 63, 66 and 67 are positioned at the vertices of a hypothetical triangle and with the axes of rotation M, N, P lying at an angle α of 120° apart. Said wheels act as supports for the container 13 (which rests on them) and comprise a groove 63A, 66A, 67A in which the edge 64 of the container 13 is positioned when resting on said wheels.

During use, the support 25 and the plate or container 13 are inserted into the chamber 2 and the shaft 21 is associated with the motor 23 (or the shaft 42 with the motor 45). By now operating a usual pushbutton 50 provided on the control panel 51 of the oven 1 (and connected in known manner to an electricity supply for the motor 23 or 45), the shaft 21 moves, with the result that the plate 13 rotates about the axis W by virtue of the gear wheels 19 and 20 or the wheel 63. In this manner, the food contained in this latter is subjected to uniform heating at least by the resistance element 11. In this manner better food preparation is achieved.

When preparation is complete, the plate 13 can be easily extracted from the chamber 2 of the oven 1 to allow its easy cleaning. Particular embodiments of the invention have been described.

## Claims

1. An oven (1) comprising a cooking chamber (2) bounded by side walls (4,5), a roof (6), a rear wall (8) and a base wall (7), and actuator means (23, 45) for the rotating movement of a support member (15, 63) for a container (13) to contain food during its preparation in the oven (1), characterised in that said support member (15, 63) can be positioned at different heights between the roof (6) and the base wall (7) of the cooking chamber (2).

2. An oven as claimed in claim 1, characterised in that the support member comprises a rotary frame (15) supporting the food container (13) and associated with a shaft (21) rotating about its own axis, said shaft and the frame (15) rotating about mutually perpendicular axes, said frame (15) and shaft (21) defining a support (25) for the container (13).

3. An oven as claimed in claim 1, characterised in that the support member for the container (13) is a frame (15) associated with a first gear wheel (19) arranged to cooperate with a second gear wheel (20) associated with a rotary shaft (21), said first and second gear wheel being arranged at an angle to each other, said member (15) and the drive shaft (21) defining a support (25) for the container (13).

4. An oven as claimed in claim 3, characterised in that said first and second gear wheel (19, 20) are arranged within a containing box structure (26) from which there emerge the rotary shaft (21), a rotary pin (19) perpendicular to said shaft and associated with the first gear wheel (19) and with the frame (15) supporting the food container (13), and a further shaft (28) coaxial to the rotary shaft (21).

5. An oven as claimed in claim 2 or 3, characterised in that the food container (13) is removably associated with the rotary frame (15).

6. An oven as claimed in claim 2 or 3, characterised in that the support (25) is associated with a grid (32).

7. An oven as claimed in claim 6, characterised in that the support (25) is slidingly movable on supports (30) associated with the grid (32) and is removable from this latter.

8. An oven as claimed in claim 2 or 3, characterised in that the rotary shaft (21) comprises means (38, 42) for its torsional engagement with the actuator means (23) for its movement.

9. An oven as claimed in claim 8, characterised in that the rotary shaft (21) can be removably associated with the actuator means (23, 45).

10. An oven as claimed in claim 1, characterised in that the actuator means (23, 45) are an electric motor, preferably of stepping type, said motor comprising a hollow (at 36) exit shaft (35).

11. An oven as claimed in claims 8 and 10, characterised in that the rotary shaft (21) has a polygonal end (38) able to cooperate with the cavity (36) in the exit shaft (35) of the electric drive motor (23).

12. An oven as claimed in claims 8 and 10, characterised in that the rotary shaft (21) cooperates via coupling elements (40, 41) with a further shaft (42) arranged to cooperate torsionally with the electric drive motor (45) and positioned with its axis perpendicular to that of the rotary shaft (21).

13. An oven as claimed in claim 12, characterised in that the coupling means are gear wheels (40, 41) arranged at an angle to each other.

14. An oven as claimed in claim 10, characterised in that the electric drive motor (23) is the usual roasting-jack operating motor.

15. An oven as claimed in claim 10, characterised in that the electric drive motor (23) comprises a plurality of exit shafts (35) arranged at different levels, the container (13) being able to be positioned at different heights within the cooking chamber (2) by operationally coupling the rotary shaft (21) with these different exit shafts (35).

16. An oven as claimed in claim 10, characterised in that the electric drive motor (45) is located in a position eccentric to that chamber wall in proximity to which it is provided.

17. An oven as claimed in claim 1, characterised by comprising, on the control panel (51) of the oven (1), an operating member (50) for controlling the movement of the rotary container.

18. An oven as claimed in claim 1, characterised in that the movable support member is a drive wheel (63) associated with a shaft (21) operated by an electrical actuator (45).

19. An oven as claimed in claim 18, characterised in that the drive wheel (63) cooperates with at least a further two wheels (66, 67) in order to support the container (13), said further wheels being preferably idle and rotating about respective support shafts (68, 69) associated with a grid (32) which can be removably inserted into the oven (1).

20. An oven as claimed in claim 18, characterised in that the wheels (63, 66, 67) comprise a groove (63A, 66A, 67A) in which the edge (64) of the container (13) is placed, said wheels being distanced apart preferably by an angle (α) of 120°.

## Patentansprüche

1. Herd (1) mit einer Erhitzungskammer (2), die durch Seitenwände (4, 5), ein Dach (6) und einen Boden (7) begrenzt ist, und mit Antriebsmitteln (23, 45) für die Drehbewegung eines Halteglieds (15, 63) für einen Behälter (13), der eine Speise für deren Zubereitung im Herd (1) enthält, **dadurch gekennzeichnet,** daß das Halteglied (15, 63) in verschiedenen Höhen zwischen dem Dach (6) und dem Boden (7) der Erhitzungskammer (2) positioniert werden kann.

2. Herd nach Anspruch 1, dadurch gekennzeichnet, daß das Halteglied einen drehbaren Kreuzhalter (15) aufweist, der den Speisenbehälter (13) stützt und mit einer Welle (21) verbunden ist, die um ihre Achse drehbar ist, und daß diese Welle und der Kreuzhalter (15) sich auf senkrecht zueinander stehenden Achsen drehen und eine Haltevorrichtung (25) für den Behälter (13) bilden.

3. Herd nach Anspruch 1, dadurch gekennzeichnet, daß das Halteglied für den Behälter (13) ein Kreuzhalter (15) ist, der mit einem ersten Getrieberad (19) verbunden ist, daß dieses Getrieberad mit einem zweiten Getrieberad (20) zusammenarbeitet, das mit einer Drehwelle (21) verbunden ist, daß das erste Getrieberad und das zweite Getrieberad zueinander in einem Winkel angeordnet sind und daß das Halteglied (15) und die Antriebswelle (21) eine Tragvorrichtung (25) für den Behälter (13) bilden.

4. Herd nach Anspruch 3, dadurch gekennzeichnet, daß das erste Getrieberad (19) und das zweite Getrieberad (20) in einem kastenförmigen Gehäuse (26) angeordnet sind, aus dem die Drehwelle (21), ein Drehstift (18) und eine weitere Welle (28) austreten, wobei der Drehstift (18) senkrecht zur Welle (21) steht und mit dem ersten Getrieberad (19) und dem den Speisenbehälter (13) stützenden Kreuzhalter (15) verbunden ist und wobei die weitere Welle ( 28) koaxial mit der Drehwelle (21) angeordnet ist.

5. Herd nach Anspruch 2 oder 3, dadurch gekennzeichnet, daß der Speisenbehälter (13) mit dem drehbaren Kreuzhalter (15) abnehmbar verbunden ist.

6. Herd nach Anspruch 2 oder 3, dadurch gekennzeichnet, daß die Tragvorrichtung (25) mit einem Rost (32) verbunden ist.

7. Herd nach Anspruch 6, dadurch gekennzeichnet, daß die Tragvorrichtung (25) auf Stützen (30) gleitend bewegbar ist, die mit dem Rost (32) verbundn sind, und vom Rost (32) abnehmbar ist.

8. Herd nach Anspruch 2 oder 3, dadurch gekennzeichnet, daß die Drehwelle (21) Mittel (38, 42) für ihren Dreheingriff mit dem Antriebsmittel (23) aufweist.

9. Herd nach Anspruch 8, dadurch gekennzeichnet, daß die Drehwelle (21) mit dem Antriebsmittel (23, 45) abnehmbar verbunden werden kann.

10. Herd nach Anspruch 1, dadurch gekennzeichnet, daß das Antriebsmittel (23, 45) ein Elektromotor, vorzugsweise ein Schrittschaltmotor, ist und eine hohle (Stelle 36) Abtriebswelle (35) aufweist.

11. Herd nach Anspruch 8 und 10, dadurch gekennzeichnet, daß die Drehwelle (21) ein vieleckiges Ende (38) aufweist, das mit einem Hohlraum (36) der Abtriebswelle (35) des Elektromotors (23) zusammenarbeiten kann.

12. Herd nach Anspruch 8 und 10, dadurch gekennzeichnet, daß die Drehwelle (21) über Kopplungselemente (40, 41) mit einer weiteren Welle (42) zusammenarbeitet, die so angeordnet ist, daß sie in Drehverbindung mit einem Elektromotor (45) zusammenarbeitet, und deren Achse senkrecht zu der der Drehwelle (21) angeordnet ist.

13. Herd nach Anspruch 12, dadurch gekennzeichnet, daß die Kupplungsmittel Getrieberäder (40, 41) sind, die senkrecht zueinander angeordnet sind.

14. Herd nach Anspruch 10, dadurch gekennzeichnet, daß der Elektromotor (23) der übliche Motor zum Antrieb der Röstvorrichtung ist.

15. Herd nach Anspruch 10, dadurch gekennzeichnet, daß der Elektromotor (23) eine Vielzahl von Abtriebswellen (35) aufweist, die in vershiedenen Höhen angeordnet ind, und daß der Behälter (13) in verschiedenen Höhen in der Erhitzungskammer (2) durch betriebsmäßiges Kuppeln der Drehwelle (21) mit diesen verschiedenen Abtriebswellen (35) positioniert werden kann.

16. Herd nach Anspruch 10, dadurch gekennzeichnet, daß der Elektromotor (45) in einer Position angeordnet ist, die exzentrisch zu derjenigen Wand ist, in deren Nähe der Elektromotor vorgesehen ist.

17. Herd nach Anspruch 1, dadurch gekennzeichnet, daß er auf seinem Bedienungsfeld (51) ein Betätigungsglied (50) zur Steuerung der Bewegung des drehbaren Behälters aufweist.

18. Herd nach Anspruch 1, dadurch gekennzeichnet, daß das bewegbare Stützglied ein Antriebsrad (63) ist, das mit einer Welle (21) verbunden ist, die von einem Elektromotor (45) angetrieben wird.

19. Herd nach Anspruch 18, dadurch gekennzeichnet, daß das Antriebsrad (63) mit mindestens zwei weiteren Rädern (66, 67) zusammenarbeitet, um den Behälter (13) zu stützen, und daß diese weiteren Räder vorzugsweise nicht angetrieben werden und sich um zugeordnete Tragwellen (68, 69) drehen, die mit einem Rost (32) verbunden sind, der in den Herd (1) abnehmbar eingeschoben werden kann.

20. Herd nach Anspruch 18, dadurch gekennzeichnet, daß die Räder (63,66, 67) jeweils eine Nut (63A, 66A, 67A) aufweisen, in die die Kante (64) des Behälters (13) eingefügt ist, wobei die Räder einen Abstand voneinander, insbesondere einen Winkelabstand von alpha = 120°, haben.

## Revendications

1. Four (1) comportant une chambre de cuisson (2) délimitée par des parois latérales (4, 5), une voûte (6), une paroi arrière (8) et une paroi de base (7), et des moyens d'actionnement (23, 45) pour le mouvement rotatif d'un élément de support (15, 63) pour un récipient plat (13) destiné à contenir des aliments pendant leur préparation dans le four (1), caractérisé en ce que ledit élément de support (15, 63) peut être positionné à différentes hauteurs entre la voûte (6) et la paroi de base (7) de la chambre de cuisson (2).

2. Four selon la revendication 1, caractérisé en ce que l'élément de support comporte un bâti rotatif (15) supportant le récipient pour aliment (13) et associé à un arbre (21) tournant autour de son propre axe, ledit arbre et le bâti (15) tournant autour d'axes mutuellement perpendiculaires, ledit bâti (15) et ledit arbre (21) définissant un support (25) pour le récipient (13).

3. Four selon la revendication 1, caractérisé en ce que l'élément de support pour le récipient (13) est un bâti (15) associé à une première roue dentée (19) prévue pour coopérer avec une deuxième roue dentée (20) associée à un arbre rotatif (21), lesdites première et deuxième roues dentées étant disposées avec un angle l'une par rapport à l'autre, ledit élément (15) et ledit arbre d'entraînement (21) définissant un support (25) pour le récipient (13).

4. Four selon la revendication 3, caractérisé en ce que lesdites première et deuxième roues dentées (19, 20) sont disposées à l'intérieur d'une structure en boîte (26) de laquelle sort l'arbre rotatif (21), un axe de rotation (19) perpendiculaire au dit arbre et associé à la première roue dentée (19) et au bâti (15) supportant le récipient pour aliment (13), et un autre arbre (28) coaxial à l'arbre rotatif (21).

5. Four selon la revendication 2 ou 3, caractérisé en ce que le récipient pour aliment (13) est associé de façon amovible au bâti rotatif (15).

6. Four selon la revendication 2 ou 3, caractérisé en ce que le support (25) est associé à une grille (32).

7. Four selon la revendication 6, caractérisé en ce que le support (25) est mobile de façon coulissante sur des supports (30) associés à la grille (32) et est amovible de cette dernière.

8. Four selon la revendication 2 ou 3, caractérisé en ce que l'arbre rotatif (21) comporte des moyens (38, 42) pour son engagement en torsion avec les moyens d'actionnement (23) pour son déplacement.

9. Four selon la revendication 8, caractérisé en ce que l'arbre rotatif (21) peut être associé de façon amovible aux moyens d'actionnement (23, 45).

10. Four selon la revendication 1, caractérisé en ce que les moyens d'actionnement (23, 45) sont constitués par un moteur électrique, de préférence du type pas-à-pas, ledit moteur comportant un arbre de sortie (35) creux (en 36).

11. Four selon les revendications 8 et 10, caractérisé en ce que l'arbre rotatif (21) a une extrémité polygonale (38) pouvant coopérer avec la cavité (36) dans l'arbre de sortie (35) du moteur électrique d'entraînement (23).

12. Four selon les revendications 8 et 10, caractérisé en ce que l'arbre rotatif (21) coopère par l'intermédiaire d'éléments d'accouplement (40, 41) avec un autre arbre (42) prévu pour coopérer en torsion avec le moteur électrique d'entraînement (45) et positionné avec son axe perpendiculaire à celui de l'arbre rotatif (21).

13. Four selon la revendication 12, caractérisé en ce que les moyens d'accouplement sont des roues dentées (40, 41) disposées avec un angle l'une par rapport à l'autre.

14. Four selon la revendication 10, caractérisé en ce que le moteur électrique d'entraînement (23) est le moteur de tournebroche habituel.

15. Four selon la revendication 10, caractérisé en ce que le moteur électrique d'entraînement (23) comporte plusieurs arbres de sortie (35) disposés à différents niveaux, le récipient (13) pouvant être positionné à différentes hauteurs à l'intérieur de la chambre de cuisson (2) en reliant de manière opérationnelle l'arbre rotatif (21) à ces différents arbres de sortie (35).

16. Four selon la revendication 10, caractérisé en ce que le moteur électrique d'entraînement (45) se trouve dans une position excentrée par rapport à la paroi de chambre à proximité de laquelle il est prévu.

17. Four selon la revendication 1, caractérisé en ce qu'il comporte, sur le panneau de commande (51) du four (1), un élément d'actionnement (50) destiné à commander le mouvement du récipient rotatif.

18. Four selon la revendication 1, caractérisé en ce que l'élément de support mobile est une roue d'entraînement (63) associée à un arbre (21) actionné par un dispositif d'actionnement électrique (45).

19. Four selon la revendication 18, caractérisé en ce que la roue d'entraînement (63) coopère avec au moins deux autres roues (66, 67) afin de supporter le récipient (13), lesdites autres roues étant de préférence folles et tournant autour d'arbres de support respectifs (68, 69) associés à une grille (32) qui peut être insérée de façon amovible dans le four (1).

20. Four selon la revendication 18, caractérisé en ce que les roues (63, 66, 67) comportent une rainure (63A, 66A, 67A) dans laquelle le bord (64) du récipient plat (13) est placé, lesdits trous étant espacés de préférence d'un angle (α) de 120°.
